(19) **Europäisches Patentamt / European Patent Office / Office européen des brevets**

(11) **EP 4 319 309 A1**

(12) # EUROPEAN PATENT APPLICATION
published in accordance with Art. 153(4) EPC

(43) Date of publication:
**07.02.2024 Bulletin 2024/06**

(21) Application number: **21933906.6**

(22) Date of filing: **31.03.2021**

(51) International Patent Classification (IPC):
***H04W 36/32*** (2009.01)

(52) Cooperative Patent Classification (CPC):
**H04W 36/32**

(86) International application number:
**PCT/CN2021/084781**

(87) International publication number:
**WO 2022/205246 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **LI, Xiaolong**
**Beijing 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **CELL RESELECTION METHOD, CELL RESELECTION APPARATUS, AND STORAGE MEDIUM**

(57) The present disclosure relates to a cell reselection method, a cell reselection apparatus, and a storage medium. The cell reselection method comprises: determining location information of a terminal, wherein the location information comprises at least one of the distance between the terminal and a cell, and a geographic location of the terminal; and performing cell reselection according to the location information. According to the present disclosure, it can be accurately determined that a terminal is located at the edge of a cell, so that cell reselection can be performed in a timely manner.

S11
```
determining location information of the terminal
```

S12
```
performing a cell reselection based on the location information
of the terminal
```

**FIG. 3**

EP 4 319 309 A1

**Description**

**TECHNICAL FIELD**

The present disclosure relates to a field of communication technologies, in particular to, a method and an apparatus for reselecting a cell, and a storage medium.

**BACKGROUND**

In related communication technologies, communication based on terrestrial networks (TN) is supported. A terminal performs a cell reselection mainly based on an S criterion and an R criterion during the communication based on the TN. For example, when reselecting a cell, the terminal may measure service qualities of neighboring cells based on a signal quality of a serving cell, and sort results of measuring the neighboring cells based on the R criterion, and reselect a target cell based on the measured result and the sorting result.

For the TN, the terminal may determine that the terminal is at an edge of the cell based on a significant difference between a reference signal received power (RSRP) measured by the terminal and a RSRP measured at a center of the cell, and performs a neighboring cell measurement and the cell reselection.

In a new generation of communication technology, non-terrestrial networks (NTN) are introduced. The NTNs communicates based on a satellite. A near-far effect of the NTNs is not as obvious as a signal near-far effect of the TNs, therefore, for the NTNs, when the satellite moves or the terminal moves, resulting in a need for the terminal to reselect the cell, it cannot timely and accurately determine whether the terminal is at the edge of the cell, and it is required to measure a neighboring cell, which may lead to a too late cell reselection and a reselection between different cells.

**SUMMARY**

To overcome the problems existing in the related art, a method and an apparatus for reselecting a cell, and a storage medium are provided in the present disclosure.

According to a first aspect of embodiments of the present disclosure, a method for reselecting a cell is provided, and performed by a terminal. The method includes:
determining location information of a terminal, in which the location information includes at least one of a distance between the terminal and a cell or a geographic location where the terminal is located; and performing a cell reselection based on the location information.

In an implementation, performing the cell reselection based on the location information includes: measuring a neighboring cell.

In an implementation, measuring the neighboring cell includes:
measuring the neighboring cell in response to a frequency priority of the neighboring cell being higher than a frequency priority of a serving cell.

In an implementation, measuring the neighboring cell includes:
measuring the neighboring cell based on the location information.

In an implementation, the method for performing the cell reselection further includes:
receiving a first message sent by a network device, in which the first message is configured to indicate parameter information that the terminal performs the cell reselection based on the location information.

In an implementation, the location information includes a distance between the terminal and a serving cell, and the first message is configured to indicate a distance threshold value.

Measuring the neighboring cell based on the location information includes:
in response to a frequency priority of the neighboring cell being lower than a frequency priority of the serving cell, or a frequency of the neighbor cell being equal to a frequency of the serving cell, in a case the distance between the terminal and the serving cell is greater than the distance threshold value, measuring the neighboring cell.

In an implementation, the location information includes a distance between the terminal and a serving cell, and the first message is configured to indicate a distance threshold value.

Measuring the neighboring cell based on the location information includes:
in response to a frequency priority of the neighboring cell being lower than a frequency priority of the serving cell, or a frequency of the neighboring cell being equal to a frequency of the serving cell, in a case that the distance between the terminal and the serving cell being greater than the distance threshold value, and a serving cell selection level being less than or equal to a reference signal received power (RSRP) signal level threshold value for initiating an intra-frequency measurement, measuring the neighboring cell.

In an implementation, the location information includes the geographic location where the terminal is located, and the first message is configured to indicate a geographic location range.

Measuring the neighboring cell based on the location information includes:
in response to a frequency priority of the neighboring cell being lower than a frequency priority of the serving cell, or a frequency of the neighboring cell being equal to a frequency of the serving cell, in a case that the geographic location where the terminal is located being within the geographic location range, measuring the neighboring cell.

In an implementation, the location information includes the geographic location where the terminal is located, and the first message is configured to indicate a geographic location range.

Measuring the neighboring cell based on the location information includes:
in response to a frequency priority of the neighboring cell being lower than a frequency priority of the serving cell, or a frequency of the neighboring cell being equal to a frequency of the serving cell, in a case that the geographic location where the terminal is located is within the geographic location range and a cell selection level is less than or equal to a reference signal received power (RSRP) signal level threshold value for initiating an intra-frequency measurement, determining measuring the neighboring cell.

In an implementation, performing the cell reselection based on the location information includes:
determining a target cell based on the location information.

In an implementation, the location information includes a distance between the terminal and a target cell.

determining the target cell based on the location information includes at least one of:
determining distances between the terminal and a plurality of cells, and taking a cell with a smallest distance in the distances as the target cell; or
determining distances between the terminal and a plurality of cells, and determining a ratio of each of the distances to a cell coverage radius corresponding to distance, and taking a cell with a minimum ratio in ratios as the target cell.

In an implementation, the location information includes a distance between the terminal and a target cell.

determining the target cell based on the location information includes at least one of:
determining N cells based on an R criterion of the cell reselection, and selecting a cell with a smallest distance from the terminal from the N cells as the target cell; or
determining N cells based on an R criterion of the cell reselection, and selecting a cell with a minimum ratio from the N cells as the target cell, in which the ratio is a ratio of the distance between the terminal and the cell to a cell coverage radius.

In an implementation, the N cells determined based on the R criterion of the cell reselection satisfy one of:
a cell selection level being greater than 0 and a cell selection quality being greater than 0; the distance between the terminal and the cell being less than a distance threshold value, or a ratio of the distance between the terminal and the cell to the cell coverage radius being less than a ratio threshold value; or the distance between the terminal and the cell being less than the distance threshold value, or the ratio of the distance between the terminal and the cell to the cell coverage radius being less than the ratio threshold value, and a cell selection level being greater than 0 and a cell selection quality of the cell being greater than 0.

In an implementation, the method further includes: reselecting the target cell.

In an implementation, determining the target cell based on the location information includes at least one of:
selecting a cell nearest the terminal as the target cell; or selecting a cell nearest the terminal from cells that satisfy an S criterion of the cell reselection as the target cell.

In an implementation, receiving the first message sent by the network device includes:
receiving the first message sent by the network device based on a system message and/or a radio resource control (RRC) release message.

According to a second aspect of embodiments of the present disclosure, a method for reselecting a cell is provided, and performed by a network device. The method includes:
sending a first message, in which the first message is configured to indicate parameter information of performing cell reselection based on location information; and the location information includes at least one of a distance between the terminal and a cell or a geographic location where the terminal is located.

In an implementation, the first message is configured to indicate at least one of a distance threshold value or a geographic location range.

In an implementation, sending the first message includes: sending the first message based on a system message and/or a radio resource control (RRC) release message.

According to a third aspect of embodiments of the present disclosure, an apparatus for reselecting a cell is provided. The apparatus includes:
a processing unit, configured to determine location information of a terminal, wherein the location information comprises at least one of a distance between the terminal and a cell or a geographic location where the terminal is located; and perform a cell reselection based on the location information.

In an implementation, the processing unit is configured to measure a neighboring cell.

In an implementation, the processing unit measures the neighboring cell in response to a frequency priority of the neighboring cell being higher than a frequency priority of a serving cell.

In an implementation, the processing unit measures the neighboring cell based on the location information.

In an implementation, the apparatus for reselecting a cell further includes a receiving unit 102. The receiving unit 102 is configured to receive a first message sent by a network device, and the first message is configured to indicate parameter information that the terminal performs the cell reselection based on the location information.

In an implementation, the location information includes a distance between the terminal and a serving cell, and the first message is configured to indicate a distance threshold value.

The processing unit is configured to, in response to a frequency priority of the neighboring cell being lower than a frequency priority of the serving cell, or a frequency of the neighbor cell being equal to a frequency of the serving cell, in a case the distance between the terminal and the serving cell is greater than the distance threshold value, measure the neighboring cell.

In an implementation, the location information includes a distance between the terminal and a serving cell, and the first message is configured to indicate a distance threshold value. The processing unit is configured to, in response to a frequency priority of the neighboring cell being lower than a frequency priority of the serving cell, or a frequency of the neighboring cell being equal to a frequency of the serving cell, in a case that the distance between the terminal and the serving cell being greater than the distance threshold value, and a serving cell selection level being less than or equal to a reference signal received power (RSRP) signal level threshold value for initiating an intra-frequency measurement, measure the neighboring cell.

In an implementation, the location information includes the geographic location where the terminal is located, and the first message is configured to indicate a geographic location range. The processing unit is configured to, in response to a frequency priority of the neighboring cell being lower than a frequency priority of the serving cell, or a frequency of the neighboring cell being equal to a frequency of the serving cell, in a case that the geographic location where the terminal is located being within the geographic location range, measure the neighboring cell.

In an implementation, the location information includes the geographic location where the terminal is located, and the first message is configured to indicate a geographic location range. The processing unit is configured to, in response to a frequency priority of the neighboring cell being lower than a frequency priority of the serving cell, or a frequency of the neighboring cell being equal to a frequency of the serving cell, in a case that the geographic location where the terminal is located is within the geographic location range and a cell selection level is less than or equal to a reference signal received power (RSRP) signal level threshold value for initiating an intra-frequency measurement, determine measuring the neighboring cell.

In an implementation, the processing unit determines a target cell based on the location information.

In an implementation, the location information includes a distance between the terminal and the target cell.

Determining the target cell based on the location information includes at least one of:

> determining distances between the terminal and a plurality of cells, and taking a cell with a smallest distance in the distances as the target cell; or
> determining distances between the terminal and a plurality of cells, and determining a ratio of each of the distances to a cell coverage radius corresponding to distance, and taking a cell with a minimum ratio in ratios as the target cell.

In an implementation, the location information includes a distance between the terminal and the target cell.

Determining the target cell based on the location information includes at least one of:

> determining N cells based on an R criterion of the cell reselection, and selecting a cell with a smallest distance from the terminal from the N cells as the target cell; or
> determining N cells based on an R criterion of the cell reselection, and selecting a cell with a minimum ratio from the N cells as the target cell, in which the ratio is a ratio of the distance between the terminal and the cell to a cell coverage radius.

In an implementation, the N cells determined based on the R criterion of the cell reselection satisfy one of: a cell selection level being greater than 0 and a cell selection quality being greater than 0; the distance between the terminal and the cell being less than a distance threshold value, or a ratio of the distance between the terminal and the cell to the cell coverage radius being less than a ratio threshold value; or the distance between the terminal and the cell being less than the distance threshold value, or the ratio of the distance between the terminal and the cell to the cell coverage radius being less than the ratio threshold value, and a cell selection level being greater than 0 and a cell selection quality of the cell being greater than 0.

In an implementation, the processing unit is further configured to reselect the target cell.

In an implementation, determining the target cell based on the location information includes at least one of: selecting a cell nearest the terminal as the target cell; or selecting a cell nearest the terminal from cells that satisfy an S criterion of the cell reselection as the target cell.

In an implementation, the receiving unit receives the first message sent by the network device based on a system message and/or a radio resource control (RRC) release message.

According to a fourth aspect of embodiments of the present disclosure, an apparatus for reselecting a cell is provided. The apparatus includes:

a sending unit, configured to send a first message, in which the first message is configured to indicate parameter information of performing cell reselection based on location information; and the location information includes at least one of a distance between a terminal and a cell or a geographic location where the terminal is located.

In an implementation, the first message is configured to indicate at least one of a distance threshold value or a geographic location range.

In an implementation, the sending unit sends the first message based on a system message and/or a radio resource control (RRC) release message.

According to a fifth aspect of embodiments of present disclosure, a device for reselecting a cell is provided. The device includes:

a processor; and a memory for storing instructions executable by the processor;

in which, the processor is configured to perform the method for reselecting the cell in the first aspect or in any one implementation of the first aspect.

According to a sixth aspect of embodiments of the present disclosure, a device for reselecting a cell is provided. The device includes:

a processor; and a memory for storing instructions executable by the processor;

in which, the processor is configured to perform the method for reselecting the cell in the second aspect or any one implementation of the second aspect.

According to a seventh aspect of embodiments of the present disclosure, a storage medium stored with instructions is provided. When the instructions in the storage medium are executed by a processor of a terminal, the terminal is caused to perform the method for reselecting the cell in the first aspect or any implementation of the first aspect.

According to an eighth aspect of embodiments of the present disclosure, a storage medium stored with instructions is provided. When the instructions in the storage medium are executed by a processor of a network device, the network device is caused to perform the method for reselecting the cell in the second aspect or any implementation of the second aspect.

The technical solution provided in embodiments of the present disclosure may include the following beneficial effect: the terminal determines the location information of the terminal, and performs the cell reselection based on the location information of the terminal. The location information includes at least one of the distance between the terminal and the cell, and the geographic location where the terminal is located, which may relatively accurately determine that the terminal is located at an edge of the cell. Therefore, the cell reselection may be performed timely.

It should be noted that, the details above and in the following are exemplary and illustrative, and do not constitute the limitation on the present disclosure.

**BRIEF DESCRIPTION OF THE DRAWINGS**

The drawings herein are incorporated into the specification and constitute a part of the specification, show embodiments in conformity with embodiments of the present disclosure, and explain the principle of the present disclosure together with the specification.

FIG. 1 is a schematic diagram illustrating a wireless communication system according to an exemplary embodiment.

FIG. 2A illustrates a schematic diagram of a network architecture and a near-far effect of a TN in an exemplary embodiment of the present disclosure.

FIG. 2B illustrates a schematic diagram of a network architecture and a near-far effect of an NTN in an exemplary embodiment of the present disclosure. FIG. 3 is a flowchart illustrating a method for reselecting a cell according to an exemplary embodiment.

FIG. 4 is a flowchart illustrating a method for reselecting a cell according to an exemplary embodiment.

FIG. 5 is a flowchart illustrating a method for reselecting a cell according to an exemplary embodiment.

FIG. 6 is a flowchart illustrating a method for reselecting a cell according to an exemplary embodiment.

FIG. 7 is a flowchart illustrating a method for reselecting a cell according to an exemplary embodiment.

FIG. 8 is a flowchart illustrating a method for reselecting a cell according to an exemplary embodiment.

FIG. 9 is a flowchart illustrating a method for reselecting a cell according to an exemplary embodiment.

FIG. 10 is a flowchart illustrating a method for reselecting a cell according to an exemplary embodiment.

FIG. 11 is a flowchart illustrating a method for reselecting a cell according to an exemplary embodiment.

FIG. 12 is a flowchart illustrating a method for reselecting a cell according to an exemplary embodiment.

FIG. 13 is a flowchart illustrating a method for reselecting a cell according to an exemplary embodiment.

FIG. 14 is a flowchart illustrating a method for reselecting a cell according to an exemplary embodiment.

FIG. 15 is a block diagram illustrating an apparatus for reselecting a cell according to an exemplary embodiment.

FIG. 16 is a block diagram illustrating an apparatus for reselecting a cell according to an exemplary embodiment.

FIG. 17 is a block diagram illustrating a device for reselecting a cell according to an exemplary embodiment.

FIG. 18 is a block diagram illustrating a device for reselecting a cell according to an exemplary embodiment.

## DETAILED DESCRIPTION

The exemplary embodiments will be described in detail here, and examples thereof are shown in the accompanying drawings. When the following descriptions refer to the accompanying drawings, same numbers in different drawings represent same or similar elements unless otherwise indicated. The implementations described in the following exemplary embodiments do not represent all implementations consistent with the present disclosure. Rather, they are merely examples of apparatuses and methods consistent with some aspects of the disclosure as detailed in the appended claims.

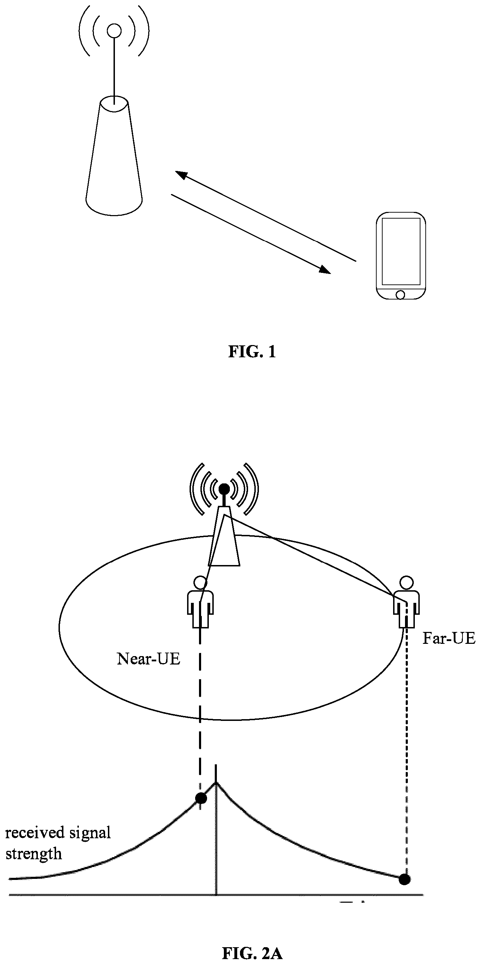

A method for reselecting a cell in embodiments of the present disclosure is applicable for a wireless communication system as illustrated in FIG. 1. As illustrated in FIG. 1, the wireless communication system includes a terminal and a network device. The terminal sends information to and receive information from the network device through wireless resources.

It may be understood that the wireless communication system as illustrated in FIG. 1 is merely illustrative purposes. The wireless communication system may further include other network devices, for example, a core network device, a wireless relay device and a wireless backhaul device not illustrated in FIG. 1. A number of network devices and a number of terminals included in the wireless communication system are not limited in embodiments of the present disclosure.

It may be further understood that the wireless communication system in embodiments of the present disclosure is a network that provides a wireless communication function. The wireless communication system may adopt different communication technologies, for example, code division multiple access (CDMA), wideband code division multiple access (WCDMA), time division multiple access (TDMA), frequency division multiple access (FDMA), orthogonal frequency-division multiple access (OFDMA), single Carrier FDMA (SC-FDMA) and carrier sense multiple access with collision avoidance. The networks may be classified into a 2G (generation) network, a 3G network, a 4G network or a future evolution network, such as, a 5G network, also referred to as a new radio (NR) network, based on capacities, rates, latencies and other factors of different networks. For ease of description, a wireless communication network is simply referred to as a network in the disclosure sometimes.

Further, the network device involved in the present disclosure may also be referred to as a wireless access network device. The wireless access network device may be an access point (AP), a wireless relay node, a wireless backhaul node, a transmission point (TP), or a transmission and reception point (TRP), etc., in a base station, an evolved node B (a base station), a home base station and a wireless fidelity (Wi-Fi) system, or may also be a gNB in an NR system, or may also be a component or a part of devices for constituting a base station. The network device further may be a vehicle-mounted device in an Internet of Vehicles (V2X) communication system. It should be understood that a specific technology and a specific device form adopted by the network device are not limited in embodiments of the present disclosure.

Further, the terminal involved in the present disclosure further may be referred to as a terminal device, a user equipment (UE), a mobile station (MS), a mobile terminal (MT), etc., which is a device that provides voice and/or data connectivity to a user. For example, the terminal may be a handheld device or a vehicle-mounted device, etc. with a wireless connection function. At present, some terminals may be, for example, a mobile phone, a pocket personal computer (PPC), a palm computer, a personal digital assistant (PDA), a notebook computer, a tablet computer, a wearable device, or a vehicle-mounted device. In addition, the terminal device further may be a vehicle-mounted device in an Internet of Vehicles (V2X) communication system. It should be understood that a specific technology and a specific device form adopted by the terminal are not limited in embodiments of the present disclosure.

The terminal and the network device may select or reselect a cell during communication. Embodiments of the present disclosure are mainly applicable for a process of performing a cell selection or a cell reselection. In the related art, for example, an S criterion and an R criterion are involved for the cell selection or reselection in a 5G NR.

The S criterion mainly refers to that $S_{rxlev} > 0$ and $S_{qual} > 0$, where $S_{rxlev}$ is a cell selection level, and $S_{qual}$ is a cell selection quality. Selecting or reselecting the cell by the terminal is required to satisfy the S criterion.

The terminal determines when to measure a neighboring cell based on the S criterion, and has the following specific rules.

For an intra-frequency neighboring cell measurement, in response to a serving cell satisfying that $S_{rxlev} > S_{IntraSearchP}$, the terminal may select not measuring the neighboring cell, and on the contrary, the terminal is required to measure the neighboring cell, where $S_{IntraSearchP}$ is a reference signal received power (RSRP) signal level threshold value for initiating an intra-frequency measurement.

For an inter-frequency neighboring cell measurement, when a frequency priority of the neighboring cell is less than or equal to a frequency priority of the serving cell, in response to the serving cell satisfying that $S_{rxlev} > S_{nonIntraSearchP}$, the terminal may select not measuring the neighboring cell, and on the contrary, the terminal is required to measure the neighboring cell, where $S_{nonIntraSearchP}$ is a reference signal received power (RSRP) signal level threshold value for initiating a inter-frequency measurement.

The R criterion refers to that:

$$Rs = Q_{meas,s} + Q_{hyst} - Q_{offsettemp}, \quad Rn = Q_{meas,n} - Q_{offset} - Q_{offsettemp}$$

where Rs is an R value of a serving cell, Rn is an R value of a neighboring cell, $Q_{meas,s}$ is an RSRP measured value of the serving cell, $Q_{meas,n}$ is an RSRP measured value of the neighboring cell, $Q_{hyst}$ is a cell reselection hysteresis value, $Q_{offsettemp}$ is a temporary offset value, and $Q_{offset}$ is an offset value.

The terminal may calculate an R value of each cell based on the R criterion when measuring the neighboring cell. The terminal only performs an R-criterion sorting for a neighboring cell that satisfies the S criterion.

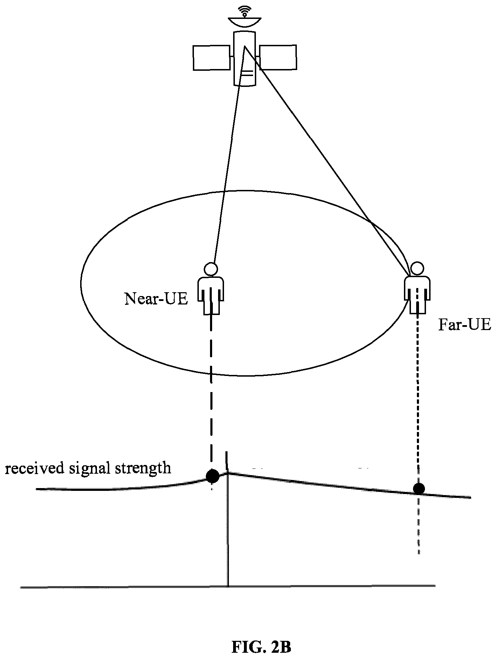

The above method for reselecting the cell based on the S criterion and the R criterion are mainly applicable to terrestrial networks (TNs). With development of communication technologies, non-terrestrial networks (NTNs) are introduced. The NTNs have network characteristics of satellite based and a large communication cell radius. The NTNs are significantly different from the TNs in a near-far effect. FIG. 2A illustrates a schematic diagram of a network architecture and a near-far effect of a TN in an exemplary embodiment of the present disclosure. FIG. 2B illustrates a schematic diagram of a network architecture and a near-far effect of an NTN in an exemplary embodiment of the present disclosure. It can be seen from FIG. 2A and FIG. 2B that there may be a far-UE and a near-UE based on a location of each terminal relative to the cell. The far-UE may be understood as a terminal at the edge of the cell. The near-UE may be understood as a terminal located within the cell. Further, a correspondence between a received signal strength of the terminal and a distance between the terminal and the cell may represent the near-far effect. It can be seen from FIG. 2A and FIG. 2B, the near-far effect of the NTN is not as obvious as the near-far effect of the TN. And, for the NTNs with a large cell radius, a difference in the RSRP or a reference signal received quality (RSRQ) between the terminal located in the center of the cell and the terminal located at the edge of the cell is relatively small, , and the large cell radius results in a large cell overlapping area for the terminals. Therefore, for the TNs, the terminal may determine that the terminal is at the edge of the cell based on a significant difference between the RSRP measured by the terminal and the RSRP measured at the center of the cell, and performs a neighboring cell measurement and a cell reselection. However, for the NTNs, when the satellite or the terminal moves to a location at which the terminal is required to perform the cell reselection, there is no obvious far-near effect like the TN, and a cell reselection is performed based on an S criterion and an R criterion, resulting in a too late cell reselection, and repeatedly performing a cell reselection between two cells by the terminal.

Therefore, for the NTNs, due to their network characteristics, the method of performing the cell reselection based on the S criterion and the R criterion cannot effectively solve the problem encountered when the terminal performs the cell selection or reselection in the NTNs.

A method for reselecting a cell is provided in embodiments of the disclosure, and in the method for reselecting the cell, the terminal may perform a cell selection or reselection based on location information of the terminal. For example, when the terminal is located at an edge of a cell in a geographical sense, a cell reselection may be performed.

In an implementation, in embodiments of the present disclosure, the terminal may determine to trigger that the terminal measures or does not measure a neighboring cell when performing the cell selection or reselection based on the location information of the terminal.

Measuring the neighboring cell by the terminal may include one or more of acquiring a neighboring cell identifier (ID), acquiring a cell system message or measuring a cell signal quality, etc.

In another implementation, in embodiments of the present disclosure, a target cell may be determined when the cell selection or reselection is performed based on the location information of the terminal.

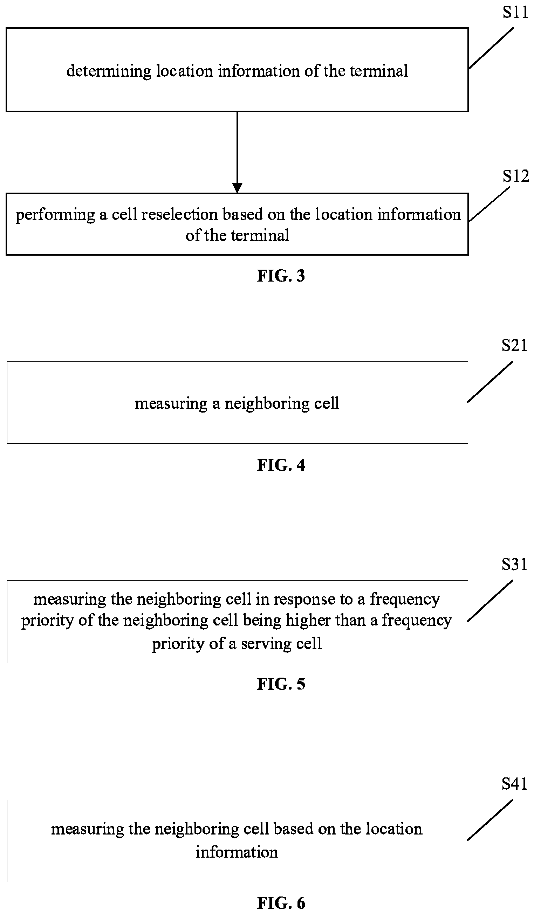

FIG. 3 is a flowchart illustrating a method for reselecting a cell according to an exemplary embodiment. As illustrated in FIG. 3, the method for reselecting the cell may be performed by a terminal, and includes the following steps.

At step S 11, location information of the terminal is determined.

The location information involved in embodiments of the disclosure includes at least one of a distance between the terminal and a cell or a geographic location where the terminal is located. The distance between the terminal and the cell may include a distance between the terminal and a satellite corresponding to the cell, or may include a distance between the terminal and a center of a serving cell, or may include a distance between the terminal and a center of a target cell.

At step S12, a cell reselection is performed based on the location information of the terminal.

In embodiments of the disclosure, performing, by the terminal, the cell reselection based on the location information of the terminal may include determining, by the terminal, whether to measure a neighboring cell, that is, determining measuring the neighboring cell, or determining not measuring the neighboring cell.

When the terminal determines measuring the neighboring cell, it may be understood as an implementation process that the terminal performs the cell reselection.

FIG. 4 is a flowchart illustrating a method for reselecting a cell according to an exemplary embodiment. As illustrated in FIG. 4, the method for reselecting the cell may be performed by a terminal, and performing the cell selection based on the location information of the terminal includes the following step.

At step S21, a neighboring cell is measured.

In an implementation, in the method for reselecting the cell provided in embodiments of the present disclosure, when the cell reselection is performed based on the location information of the terminal, the neighboring cell may be measured based on a frequency priority of the neighboring cell and a frequency priority of the serving cell.

In another implementation, in the method for reselecting the cell provided in embodiments of the present disclosure, when the cell reselection is performed based on the location information of the terminal, it may be determined that the neighboring cell is not measured based on the frequency priority of the neighboring cell and the frequency priority of the serving cell.

The frequency priority of the neighboring cell and the frequency priority of the serving cell may be configured for the terminal by a network device.

In an implementation, in embodiments of the present disclosure, when the cell reselection is performed based on the location information of the terminal, it may be determined to measure the neighboring cell in response to the frequency priority of the neighboring cell being higher than the frequency priority of the serving cell.

FIG. 5 is a flowchart illustrating a method for reselecting a cell according to an exemplary embodiment. As illustrated in FIG. 5, the method for reselecting the cell may be performed by a terminal, and includes the following step.

At step S31, the neighboring cell is measured in response to a frequency priority of the neighboring cell being higher than a frequency priority of a serving cell.

In embodiments of the present disclosure, when it is determined whether to measure the neighboring cell based on the frequency priority of the neighboring cell and the frequency priority of the serving cell, it is determined to measure the neighboring cell without considering other conditions in response to determining that the frequency priority of the neighboring cell is higher than the frequency priority of the serving cell. Other conditions for determining whether to measure the neighboring cell may be location information of the terminal, etc.

In the method for reselecting the cell provided in embodiments of the disclosure, in an implementation, it may be determined whether to measure the neighboring cell based on the location information of the terminal.

FIG. 6 is a flowchart illustrating a method for reselecting a cell according to an exemplary embodiment. As illustrated in FIG. 6, the method for reselecting the cell may be performed by a terminal, and includes the following step.

At step S41, the neighboring cell is measured based on the location information of the terminal.

In embodiments of the present disclosure, when the terminal determines to measure the neighboring cell or not to measure the neighboring cell based on the location information of the terminal, on one hand, the terminal may determine to measure the neighboring cell based on the distance between the terminal and the cell, alternatively, may determine not to measure the neighboring cell based on the distance between the terminal and the cell. For example, the neighboring cell may be measured based on the distance between the terminal and the serving cell, alternatively, the terminal may determine not to measure the neighboring cell based on the distance between the terminal and the serving cell.

On the other hand, the terminal may determine to measure the neighboring cell based on a geographical location where the terminal is located, alternatively, the terminal may determine not to measure the neighboring cell based on the geographical location where the terminal is located. For example, the terminal may determine to measure the neighboring cell when the geographical location where the terminal is located is in a geographical range of performing a cell measurement. The terminal may determine not to measure the neighboring cell when the geographical location where the terminal is located is not in the geographical range of performing the cell measurement.

In the method for reselecting the cell provided in embodiments of the present disclosure, a network device may send parameter information indicating that the terminal performs the cell reselection based on the location information to the terminal. The terminal receives the parameter information sent by the network device, and performs the cell reselection based on the parameter information and the location information of the terminal, for example, measuring or not measuring the neighboring cell.

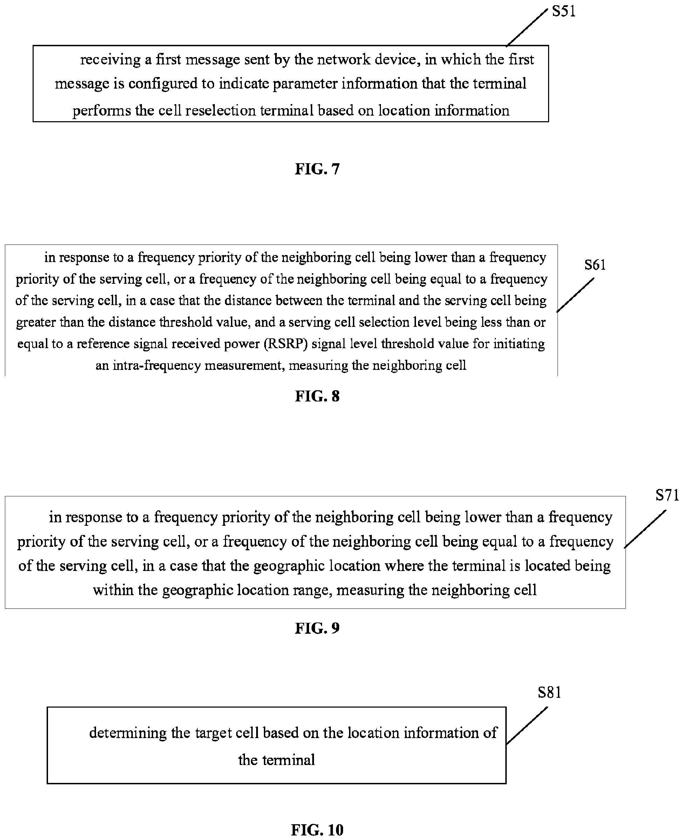

FIG. 7 is a flowchart illustrating a method for reselecting a cell according to an exemplary embodiment. As illustrated in FIG. 7, the method for reselecting the cell may be performed by a network device, and includes the following step.

At step S51, a first message sent by the network device is received.

The first message is configured to indicate parameter information that the terminal performs the cell reselection terminal based on the location information.

In embodiments of the present disclosure, the parameter information that the terminal performs the cell reselection based on the location information may include at least one of: a frequency of a neighboring cell, a frequency of a serving cell, a frequency priority of the neighboring cell, a frequency priority of the serving cell, a distance threshold value and a geographic location range.

The terminal may receive the first message sent by the network device network based on a system message and/or a radio resource control (RRC) release message.

In the method for reselecting the cell provided in embodiments of the present disclosure, in an implementation, the terminal may determine whether to measure the neighboring cell based on the frequency of the neighboring cell, the frequency of the serving cell, the frequency priority of the neighboring cell, the frequency priority of the serving cell and the location information of the terminal.

In an implementation, in embodiments of the disclosure, the terminal may determine whether to measure the neighboring cell based on the location information of the terminal in response to determining that the frequency priority of the neighboring cell is lower than the frequency priority of the serving cell.

In another implementation, in the method for reselecting the cell provided in embodiments of the disclosure, the terminal may determine whether to measure the neighboring cell based on the location information of the terminal in response to determining that the frequency of the neighboring cell is equal to the frequency of the serving cell.

In embodiments of the present disclosure, when determining whether to measure the neighboring cell based on the location information of the terminal, the terminal may determine whether to measure the neighboring cell based on the distance between the terminal and the serving cell.

In an implementation, the network device may indicate a distance threshold value for performing a cell measurement to the terminal by means of the first message. The terminal receives the distance threshold value sent by the network device, and determines whether to measure the neighboring cell based on the distance between the terminal and the serving cell and the distance threshold value.

In another implementation, the network device may indicate the distance threshold value, the frequency priority of the neighboring cell and the frequency priority of the serving cell all for performing the cell measurement to the terminal by means of the first message. The terminal receives the distance threshold value, the frequency priority of the neighboring cell and the frequency priority of the serving cell all sent by the network device, and determines whether to measure the neighboring cell based on the distance between the terminal and the serving cell, the distance threshold value, the frequency priority of the neighboring cell and the frequency priority of the serving cell.

In yet another implementation, the network device may indicate the distance threshold value for performing the cell measurement to the terminal by means of the first message. The terminal receives the distance threshold value, the frequency of the neighboring cell and the frequency of the serving cell all sent by the network device, and determines whether to measure the neighboring cell based on the distance between the terminal and the serving cell, the distance threshold value, the frequency of the neighboring cell and the frequency of the serving cell.

FIG. 8 is a flowchart illustrating a method for reselecting a cell according to an exemplary embodiment. As illustrated in FIG. 8, the method for reselecting the cell may be performed by a terminal, and includes the following step.

At step S61, in response to a frequency priority of the neighboring cell being lower than a frequency priority of the serving cell, or a frequency of the neighboring cell being equal to a frequency of the serving cell, in a case that the distance between the terminal and the serving cell is greater than the distance threshold value, and a serving cell selection level is less than or equal to a reference signal received power (RSRP) signal level threshold value for initiating an intra-frequency measurement, the neighboring cell is measured.

In an example, when the terminal determines whether to measure the neighboring cell based on the distance between the terminal and the serving cell, the network device provides a distance threshold value Rx for the terminal. The network device may send Rx to the terminal based on a system message and/or a radio resource control (RRC) release message.

Assuming that the distance between the terminal and the serving cell is R, where R is a distance between the terminal and a satellite corresponding to the cell, or a distance between the terminal and a center of the serving cell;

On one hand, when the frequency priority of the neighboring cell is lower than the frequency priority of the serving cell, or a frequency of the neighboring cell is equal to a frequency of the serving cell, a condition that the terminal measures the neighboring cell is R>Rx. That is, when R>Rx, the terminal measures the neighboring cell. It may be understood that the terminal measures the neighboring cell, without requiring that the serving cell satisfies $S_{rxlev}$ <=$S_{IntraSearchP}$.

On the other hand, when the frequency priority of the neighboring cell is lower than the frequency priority of the serving cell, or the frequency of the neighboring cell is equal to the frequency of the serving cell, a condition that the terminal measures the neighboring cell is R>Rx, and the serving cell does not satisfy $S_{IntraSearchP}$. That is, when R>Rx and $S_{rxlev}$ <=$S_{IntraSearchP}$, the terminal measures the neighboring cell.

On the other hand, when the frequency priority of the neighboring cell is higher than the frequency priority of the serving cell, the terminal measures the neighboring cell all the time without considering the distance threshold provided by the network device.

In embodiments of the present disclosure, when determining whether to measure the neighboring cell based on the location information of the terminal, the terminal may determine whether to measure the neighboring cell based on the geographical location where the terminal is located.

In an implementation, the network device may indicate a geographic location range for performing a cell measurement to the terminal by means of the first message. The terminal receives the geographic location range sent by the network device, and may determine whether to measure the neighboring cell based on the geographical location where the terminal is located and the geographic location range.

In another implementation, the network device may indicate the geographic location range, the frequency priority of the neighboring cell and the frequency priority of the serving cell all for performing the cell measurement to the terminal by means of the first message. The terminal receives the geographic location range, the frequency priority of the neighboring cell and the frequency priority of the serving cell all sent by the network device, and may determine whether to measure the neighboring cell based on the geographic location where the terminal is located, the geographic location range, the frequency priority of the neighboring cell and the frequency priority of the serving cell.

In yet another implementation, the network device may indicate the geographic location range, the frequency of the neighboring cell and the frequency of the serving cell all for performing the cell measurement to the terminal by means of the first message. The terminal receives the geographic location range, the frequency of the neighboring cell and the frequency of the serving cell all sent by the network device, and may determine whether to measure the neighboring cell based on the geographic location where the terminal is located, the geographic location range, the frequency of the neighboring cell and the frequency of the serving cell.

FIG. 9 is a flowchart illustrating a method for reselecting a cell according to an exemplary embodiment. As illustrated in FIG. 9, the method for reselecting the cell may be performed by a terminal, and includes the following step.

At step S71, in response to a frequency priority of the neighboring cell being lower than a frequency priority of the serving cell, or a frequency of the neighboring cell being equal to a frequency of the serving cell, in a case that the geographic location where the terminal is located is within the geographic location range, the neighboring cell is measured.

In an example, when the terminal determines whether to measure the neighboring cell based on the distance the terminal and the serving cell, the network device provides geographic location range information for the terminal. The network device may send the geographic location range information to the terminal based on a system message and/or a radio resource control (RRC) release message.

On one hand, in response to the frequency priority of the neighboring cell being lower than the frequency priority of the serving cell, or the frequency of the neighboring cell being equal to the frequency of the serving cell, in a case that the geographic location where the terminal is located is within the geographic location range, the terminal measures the neighboring cell.

On the other hand, in response to the frequency priority of the neighboring cell being lower than the frequency priority of the serving cell, or the frequency of the neighboring cell being equal to the frequency of the serving cell, in a case that the geographic location where the terminal is located is within the geographic location range, and the serving cell does not satisfy $S_{rxlev}$ > $S_{IntraSearchP}$, that is, $S_{rxlev}$ <=$S_{IntraSearchP}$, the terminal measures the neighboring cell.

On the other hand, in response to the frequency priority of the neighboring cell being higher than the frequency priority of the serving cell, the terminal measures the neighboring cell without considering the geographic location range information provided by the network device.

In the method for reselecting the cell provided in embodiments of the disclosure, the neighboring cell may be measured based on the level of the serving cell.

Different levels of the serving cell may correspond to including different frequency priorities. For an intra-frequency neighboring cell measurement, in response to determining that $S_{rxlev}$ of the serving cell > $S_{IntraSearchP}$, the terminal may select not measuring the neighboring cell. On the contrary, the terminal is required to measure the neighboring cell. For an inter-frequency neighboring cell measurement, when a frequency priority of the neighboring cell is less than or equal to a frequency priority of the serving cell, in response to determining that $S_{rxlev}$ of the serving cell > $S_{nonIntraSearchP}$, the terminal may select not measuring the neighboring cell. On the contrary, the terminal is required to measure the neighboring cell.

In the method for reselecting the cell provided in embodiments of the present disclosure, a process of performing by the terminal the cell reselection based on the location information of the terminal may include determining by the terminal a target cell based on the location information, that is, the terminal may select the target cell.

FIG. 10 is a flowchart illustrating a method for reselecting a cell according to an exemplary embodiment. As illustrated in FIG. 10, the method for reselecting the cell may be performed by a terminal, and includes the following step.

At step S81, a target cell is determined based on the location information of the terminal.

In embodiments of the present disclosure, when determining the target cell based on the location information, the terminal may adopt at least one of the following implementations.

In a first implementation, the target cell is determined based on a distance between the terminal and the cell (i.e., the target cell).

In a second implementation, the target cell is determined based on an R criterion.

In a third implementation, the target cell is determined based on the R criterion and the distance between the terminal and the target cell.

In an implementation of embodiments of the present disclosure, when the terminal determines the target cell based on the location information, the terminal may determine the target cell based on the distance between the terminal and the cell (i.e., the target cell).

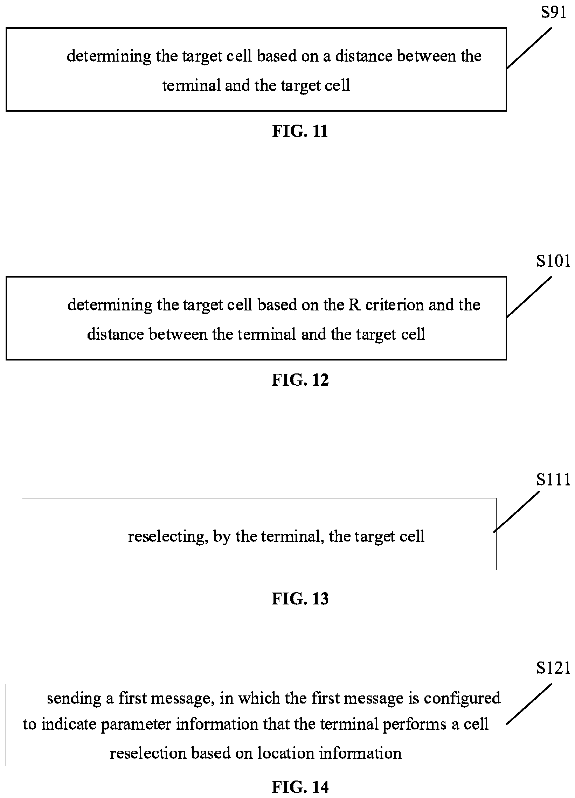

FIG. 11 is a flowchart illustrating a method for reselecting a cell according to an exemplary embodiment. As illustrated in FIG. 11, the method for reselecting the cell may be performed by a terminal, and includes the following step.

At step S91, a target cell is determined based on a distance between the terminal and the target cell.

In an implementation, in embodiments of the disclosure, the terminal may determine the target cell based on the distance between the terminal and the target cell, and includes at least one of the following implementations.

In a first implementation, the terminal determines distances between the terminal and a plurality of cells, and takes a cell with a smallest distance in the distances as the target cell. That is, the terminal may calculate distances between the terminal and a plurality of target cells, and selects a cell with a smallest distance as the target cell.

In a second implementation, the terminal determines the distances between the terminal and the plurality of cells, and respectively determines a ratio of each of the distances to a cell coverage radius corresponding to the distance, and takes a cell with a minimum ratio in the ratios as the target cell. That is, the terminal calculates distances between the terminal and a plurality of target cells and ratio of the distances to respective cell coverage radiuses, and selects a cell with a minimum ratio as the target cell.

In another implementation, in embodiments of the present disclosure, the terminal may determine he target cell based on the R criterion.

In another implementation, in embodiments of the disclosure, the terminal may determine the target cell based on the R criterion and the distance between the terminal and the target cell.

FIG. 12 is a flowchart illustrating a method for reselecting a cell according to an exemplary embodiment. As illustrated in FIG. 12, the method for reselecting the cell may be performed by a terminal, and includes the following step.

At step S101, the target cell is determined based on the R criterion and the distance between the terminal and the target cell.

Determining, by the terminal, the target cell based on the R criterion and the distance between the terminal and the target cell may include at least one of the following implementations.

In a first implementation, N cells are determined based on the R criterion of the cell reselection, and a cell with a smallest distance from the terminal is selected from the N cells as the target cell. That is, the terminal selects N cells based on the R criterion, and selects the cell with the smallest distance from the terminal from the N cells as the target cell.

In a second implementation, N cells are determined based on the R criterion of the cell reselection, and a cell with a minimum ratio is selected from the N cells as the target cell. The ratio is a ratio of the distance between the terminal and the cell to a cell coverage radius. That is, N cells are selected based on the R criterion, and the terminal determines ratios of the distances between the terminal and the N cells to respective cell coverage radiuses, and selects the cell with the minimum ratio as the target cell.

In the method for reselecting the cell provided in embodiments of the present disclosure, the N cells determined based on the R criterion of the cell reselection are required to satisfy one of the following conditions.

(1) A cell selection level is greater than 0 and a cell selection quality is greater than 0. That is, the terminal determines N cells based on an existing R criterion. That is, when the terminal selects the target cell and calculates an R value, the target cell should satisfy $S_{rxlev} > 0$ and $S_{qual} > 0$.

(2) The distance between the terminal and the cell is less than a distance threshold value, or a ratio of the distance between the terminal and the cell to a cell coverage radius is less than a ratio threshold value. That is, when the terminal selects the target cell based on the R criterion and calculates the R value, the target cell should satisfy that the distance between the terminal and the target cell is less than a threshold value. The threshold value is configured for the terminal by the network device. Alternatively, the target cell should satisfy that a ratio of the distance of the target cell to the cell coverage radius is less than a threshold value. The threshold value is configured for the terminal by the network device.

(3) The distance between the terminal and the cell is less than the distance threshold value, or the ratio of the distance between the terminal and the cell to the cell coverage radius is less than a ratio threshold value, and the cell selection level is greater than 0 and the cell selection quality of the cell is greater than 0. That is, when the terminal selects the target cell, the target cell should satisfy that the distance between the terminal and the target cell is less than the threshold value, or a ratio of the distance of the target cell to the cell coverage radius is less than the threshold value, and the target cell should satisfy $S_{rxlev}>0$ and $S_{qual}>0$. The threshold value is configured for the terminal by the network device.

Further, in the method for reselecting the cell provided in embodiments of the present disclosure, on one hand, the terminal may select a cell nearest the terminal as the target cell. On the other hand, the terminal may select a cell nearest the terminal from cells that satisfy an S criterion of the cell reselection as the target cell.

In this implementation, when the terminal selects the target cell based on the distance, the terminal may select a cell nearest the terminal as the target cell directly based on the distance between the terminal and the cell without based on the R criterion.

It may be understood that, in the method for reselecting the cell provided in embodiments of the present disclosure, a process of performing, by the terminal, the cell reselection may include reselecting the target cell.

FIG. 13 is a flowchart illustrating a method for reselecting a cell according to an exemplary embodiment. As illustrated in FIG. 13, the method for reselecting the cell may be performed by a terminal, and includes the following step.

At step S 111, the terminal reselects the target cell.

It may be understood that, in the method for reselecting the cell provided in embodiments of the present disclosure, a process of performing, by the terminal, the cell reselection based on the location information of the terminal may involve one or more of processes of measuring the neighboring cell, determining the target cell and reselecting the target cell, etc.

For example, in an example of embodiments of the disclosure, in a process of performing, by the terminal, the cell reselection based on the location information, embodiments in a process that the terminal measures a neighboring cell and determines a target cell may be implemented by means of various combinations, and may be implemented in combination with the related art. For example, the terminal may perform the cell reselection based on the method for measuring the neighboring cell provided in embodiments of the disclosure and an implementation of selecting the target cell in the related art, or the terminal may perform the cell reselection based on the method for measuring the neighboring cell in the related art and the implementation of selecting the target cell provided in embodiments of the disclosure, or the terminal may perform the cell reselection based on the method for measuring the neighboring cell and the method for selecting the target cell both provided in embodiments of the disclosure.

In an example, in the method for reselecting the cell provided in embodiments of the present disclosure, the terminal may measure the neighboring cell based on the location information, and determine the target cell based on the distance between the terminal and the target cell. For example, the network device provides a distance threshold value Rx for the terminal. The network device may send Rx to the terminal based on a system message and/or an RRC release message. A distance between the terminal and a serving cell may be R. R may be a distance between the terminal and a satellite corresponding to the serving cell, or a distance between the terminal and a center of the serving cell. In response to a frequency priority of the neighboring cell being lower than a frequency priority of the serving cell, or a frequency of the neighboring cell being equal to a frequency of the serving cell, a condition that the terminal measures the neighboring cell is R>Rx; that is, when R>Rx, the terminal measures the neighboring cell. In response to the frequency priority of the neighboring cell being lower than the frequency priority of the serving cell, or the frequency of the neighboring cell being equal to the frequency of the serving cell, a condition that the terminal measures the neighboring cell is R>Rx, and the serving cell does not satisfy $S_{rxlev} > S_{IntraSearch}$, that is, when R>Rx and $S_{rxlev} <=S_{IntraSearchP}$, the terminal measures the neighboring cell. In response to the frequency priority of the neighboring cell being higher than the frequency priority of the serving cell, the terminal measures the neighboring cell without considering a distance threshold provided by the network device. After the terminal measures the neighboring cell based on the location information, the target cell may be selected based on the distance between the terminal and the target cell. For example, the terminal may calculate distances between the terminal and a plurality of target cells and select a cell with a minimum cell as the target cell, alternatively, the terminal may calculate ratios of the distances of the plurality of target cells to respective cell coverage radiuses, and select a cell with a minimum ratio as the target cell.

In another example, in the method for reselecting the cell provided in embodiments of the present disclosure, the terminal may measure the neighboring cell based on the location information, and determine the target cell based on an R criterion and the distance between the terminal and the target cell. For example, the network device provides the distance threshold value Rx for the terminal, and the network device may send Rx to the terminal based on the system message and/or the RRC release message. The distance between the terminal and the serving cell is R, R may be a distance between the terminal and the satellite corresponding to the serving cell, or a distance between the terminal and the center of the serving cell. In response to the frequency priority of the neighboring cell being lower than the frequency priority of the serving cell, or the frequency of the neighboring cell being equal to the frequency of the serving cell, a condition that the terminal measures the neighboring cell is R>Rx; that is, when R>Rx, the terminal measures the neighboring cell. In response to the frequency priority of the neighboring cell being lower than the frequency priority of the serving cell, or the frequency of the neighboring cell being equal to the frequency of the serving cell, a condition that the terminal measures the neighboring cell is R>Rx, and the serving cell does not satisfy $S_{rxlev} > S_{IntraSearch}$, that is, when R>Rx and $S_{rxlev} <= S_{IntraSearchP}$, the terminal measures the neighboring cell. In response to the frequency priority of the neighboring cell being higher than the frequency priority of the serving cell, the terminal measures the neighboring cell all the time without considering the distance threshold provided by the network device. After the terminal measures the neighboring cell based on the location information, the target cell may be determined based on the R criterion and the distance between the terminal and the target cell. For example, the terminal selects N cells based on the R criterion, and selects a cell with a smallest distance from the terminal from the N cells as the target cell. Alternatively, the terminal selects N cells based on the R criterion, and determines ratios of the distances between the terminal and the N cells to respective cell coverage radiuses, and selects a cell with a minimum ratio as the target cell.

In yet another example, in the method for reselecting the cell provided in embodiments of the present disclosure, the terminal may measure the neighboring cell based on the method for measuring the neighboring cell in the related art, and select the target cell based on the method for selecting the target cell provided in embodiments of the present disclosure. For example, in embodiments of the present disclosure, the terminal may determine whether to measure the neighboring cell based on an S criterion, and determine the target cell based on the location information. For example, for an intra-frequency neighboring cell measurement, in response to the serving cell satisfying $S_{rxlev} <= S_{IntraSearchP}$, the terminal may select measuring the neighboring cell. For an inter-frequency neighboring cell measurement, in response to the frequency priority of the neighboring cell is less than or equal to the frequency priority of the serving cell, when $S_{rxlev}$ of the serving cell<= $S_{nonIntraSearchP}$, the terminal may select measuring the neighboring cell. After the terminal measures the neighboring cell based on the S criterion, the target cell may be determined based on one or more of the R criterion and the distance between the terminal and the target cell. For example, the terminal selects N cells based on the R criterion, and selects the cell with the smallest distance from the terminal from the N cells as the target cell. Alternatively, the terminal selects N cells based on the R criterion, and determines ratios of the distances between the terminal and the N cells to respective cell coverage radiuses, and selects the cell with the minimum ratio as the target cell.

It may be understood that the above examples are only illustrative, there may be a plurality of different combinations for a process of measuring the neighboring cell and selecting the target cell for convenience of a cell reselection.

Based on the same conception, a method for reselecting a cell is further provided in embodiments of the disclosure, and may be performed by a network device.

In the method for reselecting the cell provided in embodiments of the present disclosure, the network device may send to the terminal parameter information that the terminal performs the cell reselection based on location information, so that the terminal may receive the parameter information sent by the network device, and perform a cell reselection based on the parameter information and the location information of the terminal. FIG. 14 is a flowchart illustrating a method for reselecting a cell according to an exemplary embodiment. As illustrated in FIG. 14, the method for reselecting the cell may be performed by a network device, and includes the following steps.

At step S121, a first message is sent. The first message is configured to indicate parameter information that a terminal performs a cell reselection based on location information.

In embodiments of the present disclosure, the parameter information that the terminal performs the cell reselection based on location information may include at least one of: a frequency of a neighboring cell, a frequency of a serving cell, a frequency priority of the neighboring cell, a frequency priority of the serving cell, a distance threshold value or a geographic location range.

The network device may send the first message based on a system message and/or a radio resource control (RRC) release message.

In the method for reselecting the cell provided in embodiments of the present disclosure, in an implementation, the network device may send the frequency of the neighboring cell, the frequency of the serving cell, the frequency priority of the neighboring cell and the frequency priority of the serving cell to the terminal through the first message, so that the terminal may determine whether to measure the neighboring cell based on the frequency of the neighboring cell, the frequency of the serving cell, the frequency priority of the neighboring cell, the frequency priority of the serving cell and location information of the terminal.

In an implementation, the network device may indicate a distance threshold value for a cell measurement to the terminal by means of the first message. The terminal receives the distance threshold value sent by the network device, and determines whether to measure the neighboring cell based on the distance between the terminal and the serving cell and the distance threshold value.

In another implementation, the network device may indicate the distance threshold value, the frequency priority of the neighboring cell and the frequency priority of the serving cell all for the cell measurement to the terminal by means of the first message. The network device receives the frequency, the frequency priority of the neighboring cell and the frequency priority of the serving cell sent by the network device, so that the terminal may determine whether to measure the neighboring cell based on the distance between the terminal and the serving cell, the distance threshold value, the frequency priority of the neighboring cell and the frequency priority of the serving cell.

In yet another implementation, the network device may indicate the distance threshold value, the frequency of the neighboring cell and the frequency of the serving cell all for the cell measurement to the terminal by means of the first message. The terminal receives the distance threshold value, the frequency of the neighboring cell and the frequency of the serving cell sent by the network device, so that the terminal determines whether to measure the neighboring cell based on the distance between the terminal and the serving cell, the distance threshold value, the frequency of the neighboring cell and the frequency of the serving cell.

In the method for reselecting the cell provided in embodiments of the present disclosure, the terminal determines the location information of the terminal, and performs the cell reselection based on the location information of the terminal. The location information includes at least one of the distance between the terminal and the cell, and the geographic location where the terminal is located, which may relatively accurately determine that the terminal is located at the edge of the cell. Therefore, the cell reselection may be timely performed.

It may be understood that the method for reselecting the cell provided in embodiments of the present disclosure is applicable for a process of achieving the cell reselection by interaction between the terminal and the network device. In the process of achieving the cell reselection by interaction between the terminal and the network device, the terminal and the network device each has functions involved in the above embodiments. Therefore, the process of achieving the cell reselection by interaction between the terminal and the network device may refer to related descriptions of the above embodiments, which will not be repeated herein.

It needs to be noted that, those skilled in the art may understand that various implementations/embodiments involved in embodiments of the present disclosure may be used in combination with the above embodiments, and may be independently used. Whether independently used or used in combination with the above embodiments, the implementation principle is similar. In embodiments of the present disclosure, part of embodiments is illustrated by the implementations used together. It may be understood by those skilled in the art that the examples are not a limitation of embodiments of the present disclosure.

Based on the same conception, an apparatus for reselecting a cell is further provided in embodiments of the present disclosure.

It may be understood that the apparatus for reselecting the cell provided in embodiments of the present disclosure includes hardware structures and/or software modules that perform corresponding functions in order to achieve the above functions. In combination with modules and algorithm steps of examples described in embodiments of the present disclosure, the embodiments of the present disclosure may be implemented in the form of a hardware or a combination of a hardware and a computer software. Whether a certain function is executed by a hardware or a computer software driving a hardware depends on specific applications and design constraints of the technical solution. Those skilled in the art may adopt different methods for each specific application to implement the described functions, but such implementation should not be considered as beyond the scope of the technical solutions in embodiments of the present disclosure.

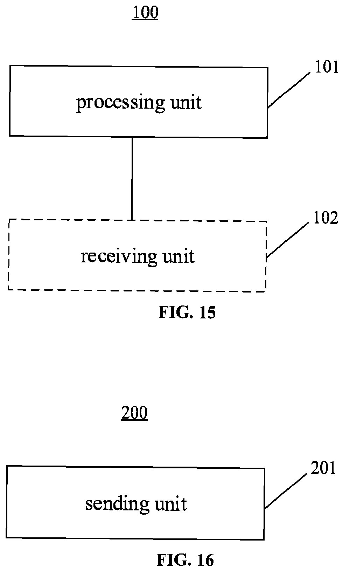

FIG. 15 is a block diagram illustrating an apparatus for reselecting a cell according to an exemplary embodiment. As illustrated in FIG. 15, the apparatus 100 for reselecting the cell includes a processing unit 101.

The processing unit 101 is configured to determine location information of a terminal. The location information includes at least one of a distance between the terminal and a cell or a geographic location where the terminal is located; and perform a cell reselection based on the location information.

In an implementation, the processing unit 101 is configured to measure a neighboring cell.

In an implementation, the processing unit 101 measures the neighboring cell in response to a frequency priority of the neighboring cell being higher than a frequency priority of a serving cell.

In an implementation, the processing unit 101 measures the neighboring cell based on the location information.

In an implementation, the apparatus 100 for reselecting the cell further includes a receiving unit. The receiving unit is configured to receive a first message sent by a network device, and the first message is configured to indicate parameter information that the terminal performs the cell reselection based on the location information.

In an implementation, the location information includes a distance between the terminal and a serving cell, and the first message is configured to indicate a distance threshold value.

The processing unit 101 is configured to, in response to a frequency priority of the neighboring cell being lower than a frequency priority of the serving cell, or a frequency of the neighbor cell being equal to a frequency of the serving cell, in a case the distance between the terminal and the serving cell is greater than the distance threshold value, measure the neighboring cell.

In an implementation, the location information includes a distance between the terminal and a serving cell, and the first message is configured to indicate a distance threshold value. The processing unit is configured to, in response to a frequency priority of the neighboring cell being lower than a frequency priority of the serving cell, or a frequency of the neighboring cell being equal to a frequency of the serving cell, in a case that the distance between the terminal and the serving cell being greater than the distance threshold value, and a serving cell selection level being less than or equal to a reference signal received power (RSRP) signal level threshold value for initiating an intra-frequency measurement, measure the neighboring cell.

In an implementation, the location information includes the geographic location where the terminal is located, and the first message is configured to indicate a geographic location range. The processing unit 101 is configured to, in response to a frequency priority of the neighboring cell being lower than a frequency priority of the serving cell, or a frequency of the neighboring cell being equal to a frequency of the serving cell, in a case that the geographic location where the terminal is located being within the geographic location range, measure the neighboring cell.

In an implementation, the location information includes the geographic location where the terminal is located, and the first message is configured to indicate a geographic location range. The processing unit 101 is configured to, in response to a frequency priority of the neighboring cell being lower than a frequency priority of the serving cell, or a frequency of the neighboring cell being equal to a frequency of the serving cell, in a case that the geographic location where the terminal is located is within the geographic location range and a cell selection level is less than or equal to a reference signal received power (RSRP) signal level threshold value for initiating an intra-frequency measurement, determine measuring the neighboring cell.

In an implementation, the processing unit 101 determines a target cell based on the location information.

In an implementation, the location information includes a distance between the terminal and the target cell.

Determining the target cell based on the location information includes at least one of:

determining distances between the terminal and a plurality of cells, and taking a cell with a smallest distance in the distances as the target cell; or

determining distances between the terminal and a plurality of cells, and determining a ratio of each of the distances to a cell coverage radius corresponding to distance, and taking a cell with a minimum ratio in ratios as the target cell.

In an implementation, the location information includes a distance between the terminal and the target cell.

Determining the target cell based on the location information includes at least one of:

determining N cells based on an R criterion of the cell reselection, and selecting a cell with a smallest distance from the terminal from the N cells as the target cell; or

determining N cells based on an R criterion of the cell reselection, and selecting a cell with a minimum ratio from the N cells as the target cell. The ratio is a ratio of the distance between the terminal and the cell to a cell coverage radius.

In an implementation, the N cells determined based on the R criterion of the cell reselection satisfy one of: a level selected by the cell being greater than 0 and a quality selected by the cell being greater than 0; the distance between the terminal and the cell being less than a distance threshold value, or a ratio of the distance between the terminal and the cell to the cell coverage radius being less than a ratio threshold value; or the distance between the terminal and the cell being less than the distance threshold value, or the ratio of the distance between the terminal and the cell to the cell coverage radius being less than the ratio threshold value, and a cell selection level being greater than 0 and a cell selection quality of the cell being greater than 0.

In an implementation, the processing unit 101 is further configured to reselect the target cell.

In an implementation, determining the target cell based on the location information includes at least one of: selecting a cell nearest the terminal as the target cell; or selecting a cell nearest the terminal from cells that satisfy an S criterion of the cell reselection as the target cell.

In an implementation, the receiving unit 102 receives the first message sent by the network device based on a system message and/or a radio resource control (RRC) release message.

FIG. 16 is a block diagram illustrating an apparatus for reselecting a cell according to an exemplary embodiment. As illustrated in FIG. 16, the apparatus 200 for reselecting the cell includes a sending unit 201.

The sending unit 201 is configured to send a first message. The first message is configured to indicate parameter information of performing a cell reselection based on location information; and the location information includes at least one of a distance between a terminal and a cell or a geographic location where the terminal is located.

In an implementation, the first message is configured to indicate at least one of a distance threshold value or a geographic location range.

In an implementation, the sending unit 201 sends the first message based on a system message and/or a radio resource control (RRC) release message.

With regard to the apparatus in the above embodiments, the specific way in which each module performs the operation has been described in the embodiments of the method and will not be elaborated here.

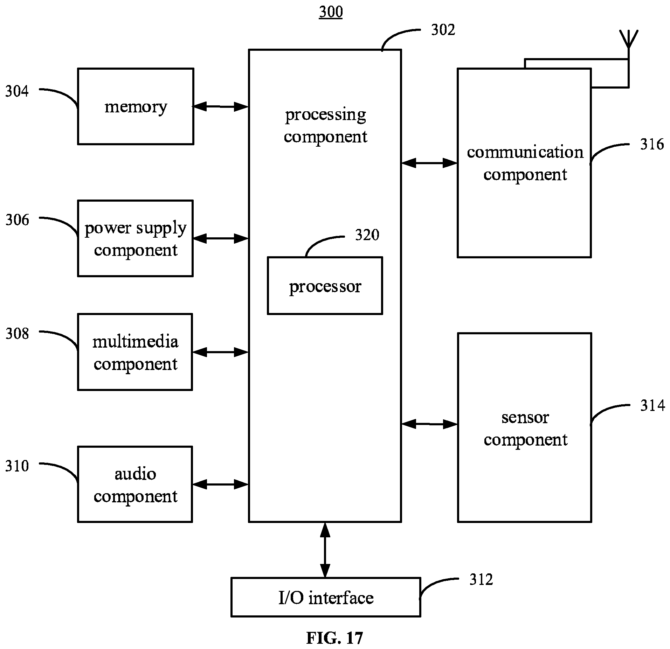

FIG. 17 is a block diagram illustrating a device 300 for reselecting a cell according to an exemplary embodiment. For example, the device 300 may be a mobile phone, a computer, a digital broadcasting terminal, a messaging device, a game console, a tablet device, a medical equipment, a fitness equipment, a personal digital assistant, etc.

As illustrated in FIG. 17, the device 300 may include one or more components: a processing component 302, a memory 304, a power supply component 306, a multimedia component 308, an audio component 310, an input/output (I/O) interface 312, a sensor component 314, and a communication component 316.

The processing component 302 generally controls the whole operation of the device 300, such as operations related to display, phone call, data communication, camera operation and recording operation. The processing component 302 may include one or more processors 320 to perform instructions, to complete all or part of steps of the above method. In addition, the processing component 302 may include one or more modules for the convenience of interaction between the processing component 302 and other components. For example, the processing component 302 may include a multimedia module for the convenience of interaction between the multimedia component 308 and the processing component 302.

The memory 304 is configured to store all types of data to support the operation of the device 300. Examples of the data include the instructions of any applications or methods operated on the device 300, contact data, phone book data, messages, pictures, videos, etc. The memory 304 may be implemented by any type of volatile or non-volatile storage devices or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 306 may provide power supply for all components of the device 300. The power supply component 306 may include a power supply management system, one or more power supplies, and other units related to generating, managing and distributing power for the device 300.

The multimedia component 308 includes an output interface screen provided between the device 300 and the user. In some embodiments, the screen may include a liquid crystal display (LCD) and a touch panel (TP). When the screen includes a touch panel, the screen may be implemented as a touch screen to receive input signals from the user. The touch panel includes one or more touch sensors to sense touch, slide and gestures on the touch panel. The touch sensor may not only sense the boundary of touch or slide action, but also detect the duration and pressure related to the touch or slide operation. In some embodiments, the multimedia component 308 includes a front camera and/or a rear camera. When the device 300 is in an operation mode, such as a shooting mode or a video mode, the front camera or the rear camera may receive external multimedia data. Each front camera and rear camera may be a fixed optical lens system or an optical lens system with a focal length and an optical zoom capacity.

The audio component 310 is configured as an output and/or input signal. For example, the audio component 310 includes a microphone (MIC). When the device 300 is in operation mode, such as call mode, record mode, and speech recognition mode, the microphone is configured to receive external audio signals. The audio signals received may be further stored in the memory 304 or sent via the communication component 316. In some embodiments, the audio component 310 further includes a speaker configured to output an audio signal.

The I/O interface 312 provides an interface for the processing component 302 and the peripheral interface module, and the peripheral interface module may be a keyboard, a click wheel, a button, etc. The buttons may include but not limited to a home button, a volume button, a start button and a lock button.

The sensor component 314 includes one or more sensors, configured to provide various aspects of status assessment for the device 300. For example, the sensor component 314 may detect the on/off state of the device 300 and the relative positioning of the component. For example, the component is a display and a keypad of the device 300. The sensor component 314 may further detect the location change of the device 300 or one component of the device 300, the presence or absence of contact between the user and the device 300, the orientation or acceleration/deceleration of the device 300, and the temperature change of the device 300. The sensor component 314 may include a proximity sensor, which is configured to detect the existence of the objects nearby without any physical contact. The sensor component 314 may further include a light sensor such as CMOS or CCD image sensor, which is configured to use in imaging applications. In some embodiments, the sensor component 314 may further include an acceleration transducer, a gyroscope sensor, a magnetic sensor, a pressure sensor or a temperature sensor.

The communication component 316 is configured for the convenience of wire or wireless communication between the device 300 and other devices. The device 300 may access wireless networks based on a communication standard, such as Wi-Fi, 2G or 3G, or their combination. In an exemplary embodiment, the communication component 316 receives broadcast signals or broadcast-related information from an external broadcast management system via a broadcast channel. In an exemplary embodiment, the communication component 316 further includes a near field communication (NFC) module to facilitate short-range communication. For example, an NFC module may be implemented based on a radio frequency identification (RFID) technology, an infrared data association (IRDA) technology, an ultra-wideband (UWB) technology, Bluetooth (BT) technology and other technologies.

In an exemplary embodiment, the device 300 may be implemented by one or more application specific integrated circuits(ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In an exemplary embodiment, a non-transitory computer readable storage medium is further provided which includes instructions, such as the memory 304 including instructions. The instructions may be executed by the processor 320 of the device 300 to complete the above methods. For example, the non-transitory computer-readable storage medium may be a ROM, a random-access memory (RAM), a CD-ROM, a magnetic tape, a floppy disk, an optical data storage device, etc.

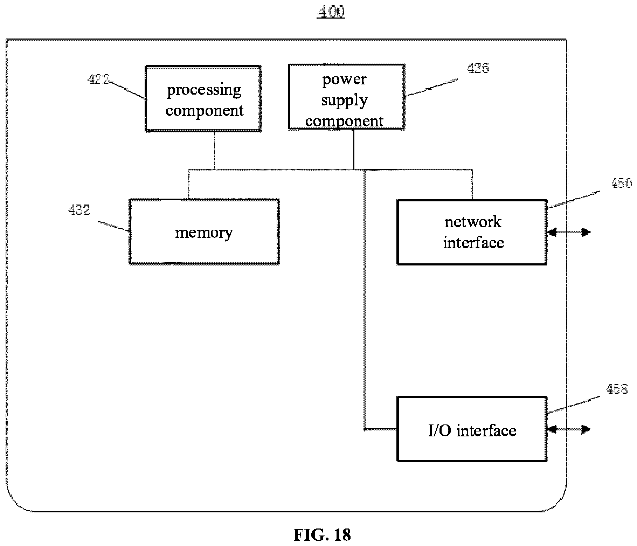

FIG. 18 is a block diagram illustrating a device 400 for selecting a cell according to an exemplary embodiment. For example, the device 400 may be provided as a network device, and for example, a base station. As illustrated in FIG. 18, the device 400 includes a processing component 422, which further includes one or more processors, and memory resources represented by a memory 432, which are configured to store instructions executable by the processing component 422, and for example, an application. The application stored in the memory 432 may include one or more modules each of which corresponds to a set of instructions. In addition, the processing component 422 is configured to execute instructions, to perform the above method.

The device 400 may further include one power supply component 426 configured to execute power management of the device 400, and one wired or wireless network interface 450 configured to connect the device 400 to a network, and one input/output(I/O) interface 458. The device 400 may operate an operating system stored in the memory 432, for example, Windows ServerTM, Mac OS XTM, UnixTM, LinuxTM, FreeBSDTM.

In an exemplary embodiment, a non-transitory computer-readable storage medium including instructions is further provided, for example, the memory 432 including instructions. The instructions may be executed by the processing component 422 of the device 400 to complete the above methods. For example, the non-transitory computer-readable storage medium may be a ROM, a random-access memory (RAM), a CD-ROM, a magnetic tape, a floppy disk, an optical data storage device, etc.

It may be further understood that "a plurality of' in the present disclosure means two or above, which is similar to other quantifiers. "and/or", describes the relationship of the association objects, indicating that there may exist three relationships, for example, A and/or B, may represent: any of existing A only, existing both A and B, or existing B only. The character "/" generally means the contextual object is a kind of "or" relationship. The singular forms "a", "the" and "said are also intended to include plural forms, unless the context clearly indicates otherwise.

It should be further understood that, although the terms "first", "second", "third", etc. may be configured to describe various information, such information shall not be limited to these terms. These terms are only used to distinguish the same type of information, rather than indicate a particular order or importance degree. In fact, "first", "second" and other similar descriptions may be used interchangeably. For example, subject to the scope of this present disclosure, first information may also be referred to as second information, and similarly, and second information may also be referred to as first information.

It may be further understood that, even though operations are described in the drawings in a particular order, it should not be understood as requiring that such operations be performed in the particular order shown or in sequential order, or that all illustrated operations be performed to obtain desirable results. In certain circumstances, multitasking and parallel processing may be advantageous.

After considering the specification and practicing the disclosure here, those skilled in the art will easily think of other implementations. The present application is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of the present disclosure are given by the appended claims.

It should be understood that the present disclosure is not limited to the precise structure described above and shown in the drawings, and various modifications and changes may be made without departing from its scope. The scope of the present application is only limited by the appended claims. The scope of the present application is only limited by the appended claims.

**Claims**

1. A method for reselecting a cell, performed by a terminal, comprising:

determining location information of the terminal, wherein the location information comprises at least one of a distance between the terminal and the cell or a geographic location where the terminal is located; and performing a cell reselection based on the location information.

2. The method according to claim 1, wherein performing the cell reselection based on the location information comprises:
measuring a neighboring cell.

3. The method according to claim 2, wherein measuring the neighboring cell comprises:
measuring the neighboring cell in response to a frequency priority of the neighboring cell being higher than a frequency priority of a serving cell.

4. The method according to claim 2, wherein measuring the neighboring cell comprises:
measuring the neighboring cell based on the location information.

5. The method according to claim 1 or 4, further comprising:
receiving a first message sent by a network device, wherein the first message is configured to indicate parameter information that the terminal performs the cell reselection based on the location information.

6. The method according to claim 5, wherein the location information comprises a distance between the terminal and a serving cell, and the first message is configured to indicate a distance threshold value; and
measuring the neighboring cell based on the location information comprises:
in response to a frequency priority of the neighboring cell being lower than a frequency priority of the serving cell, or a frequency of the neighbor cell being equal to a frequency of the serving cell, in a case that the distance between the terminal and the serving cell is greater than the distance threshold value, measuring the neighboring cell.

7. The method according to claim 5, wherein the location information comprises a distance between the terminal and a serving cell, and the first message is configured to indicate a distance threshold value; and
measuring the neighboring cell based on the location information comprises:
in response to a frequency priority of the neighboring cell being lower than a frequency priority of the serving cell, or a frequency of the neighboring cell being equal to a frequency of the serving cell, in a case that the distance between the terminal and the serving cell is greater than the distance threshold value, and a serving cell selection level is less than or equal to a reference signal received power (RSRP) signal level threshold value for initiating an intra-frequency measurement, measuring the neighboring cell.

8. The method according to claim 5, wherein the location information comprises the geographic location where the terminal is located, and the first message is configured to indicate a geographic location range; and
measuring the neighboring cell based on the location information comprises:
in response to a frequency priority of the neighboring cell being lower than a frequency priority of the serving cell, or a frequency of the neighboring cell being equal to a frequency of the serving cell, in a case that the geographic location where the terminal is located being within the geographic location range, measuring the neighboring cell.

9. The method according to claim 5, wherein the location information comprises the geographic location where the terminal is located, and the first message is configured to indicate a geographic location range; and
measuring the neighboring cell based on the location information comprises:
in response to a frequency priority of the neighboring cell being lower than a frequency priority of the serving cell, or a frequency of the neighboring cell being equal to a frequency of the serving cell, in a case that the geographic location where the terminal is located is within the geographic location range and a cell selection level is less than or equal to a reference signal received power (RSRP) signal level threshold value for initiating an intra-frequency measurement, determining measuring the neighboring cell.

10. The method according to claim 1, wherein performing the cell reselection based on the location information comprises:
determining a target cell based on the location information.

11. The method according to claim 10, wherein the location information comprises a distance between the terminal and the target cell; and
determining the target cell based on the location information comprises at least one of:

determining distances between the terminal and a plurality of cells, and taking a cell with a smallest distance in the distances as the target cell; or
determining distances between the terminal and a plurality of cells, and determining a ratio of each of the distances to a cell coverage radius corresponding to distance, and taking a cell with a minimum ratio in ratios as the target cell.

12. The method according to claim 10, wherein the location information comprises a distance between the terminal and the target cell; and
determining the target cell based on the location information comprises at least one of:

   determining N cells based on an R criterion of the cell reselection, and selecting a cell with a smallest distance from the terminal from the N cells as the target cell; or
   determining N cells based on an R criterion of the cell reselection, and selecting a cell with a minimum ratio from the N cells as the target cell, wherein the ratio is a ratio of the distance between the terminal and the cell to a cell coverage radius.

13. The method according to claim 12, wherein the N cells determined based on the R criterion of the cell reselection satisfy one of:

   a cell selection level being greater than 0 and a cell selection quality being greater than 0;
   the distance between the terminal and the cell being less than a distance threshold value, or a ratio of the distance between the terminal and the cell to the cell coverage radius being less than a ratio threshold value; or
   the distance between the terminal and the cell being less than the distance threshold value, or the ratio of the distance between the terminal and the cell to the cell coverage radius being less than the ratio threshold value, and a cell selection level being greater than 0 and a cell selection quality of the cell being greater than 0.

14. The method according to any one of claims 10 to 13, further comprising:
reselecting the target cell.

15. The method according to claim 10, wherein reselecting the target cell based on the location information comprises at least one of:

   selecting a cell nearest the terminal as the target cell; or
   selecting a cell nearest the terminal from cells that satisfy an S criterion of the cell reselection as the target cell.

16. The method according to claim 5, wherein receiving the first message sent by the network device comprises:
receiving the first message sent by the network device based on a system message and/or a radio resource control (RRC) release message.

17. A method for reselecting a cell, performed by a network device, comprising:

   sending a first message, wherein the first message is configured to indicate parameter information of performing a cell reselection based on location information; and
   wherein the location information comprises at least one of a distance between a terminal and a cell or a geographic location where the terminal is located.

18. The method according to claim 17, wherein the first message is configured to indicate at least one of a distance threshold value or a geographic location range.

19. The method according to claim 17 or 18, wherein sending the first message comprises:
sending the first message based on a system message and/or a radio resource control (RRC) release message.

20. An apparatus for reselecting a cell, comprising:
a processing unit, configured to determine location information of a terminal, wherein the location information comprises at least one of a distance between the terminal and a cell or a geographic location where the terminal is located; and perform a cell reselection based on the location information.

21. An apparatus for reselecting a cell, comprising:
a sending unit, configured to send a first message, wherein the first message is configured to indicate parameter information of performing a cell reselection based on location information; and the location information comprises at least one of a distance between a terminal and a cell or a geographic location where the terminal is located.

22. A device for reselecting a cell, comprising:

a processor; and
a memory for storing instructions executable by the processor;
wherein the processor is configured to perform the method of any one of claims 1 to 16 or perform the method of any one of claims 17 to 19.

23. A storage instruction stored with instructions, wherein when the instructions in the storage medium are executed by a processor of a terminal, the terminal is caused to perform the method of any one of claims 1 to 14, or when the instructions in the storage medium are executed by a processor of a network device, the network device is caused to perform the method of any one of claims 17 to 19.

**FIG. 1**

Near-UE

Far-UE

received signal
strength

**FIG. 2A**

FIG. 2B

S11

determining location information of the terminal

performing a cell reselection based on the location information of the terminal

S12

**FIG. 3**

measuring a neighboring cell

S21

**FIG. 4**

measuring the neighboring cell in response to a frequency priority of the neighboring cell being higher than a frequency priority of a serving cell

S31

**FIG. 5**

measuring the neighboring cell based on the location information

S41

**FIG. 6**

S51

receiving a first message sent by the network device, in which the first message is configured to indicate parameter information that the terminal performs the cell reselection terminal based on location information

**FIG. 7**

in response to a frequency priority of the neighboring cell being lower than a frequency priority of the serving cell, or a frequency of the neighboring cell being equal to a frequency of the serving cell, in a case that the distance between the terminal and the serving cell being greater than the distance threshold value, and a serving cell selection level being less than or equal to a reference signal received power (RSRP) signal level threshold value for initiating an intra-frequency measurement, measuring the neighboring cell

S61

**FIG. 8**

S71

in response to a frequency priority of the neighboring cell being lower than a frequency priority of the serving cell, or a frequency of the neighboring cell being equal to a frequency of the serving cell, in a case that the geographic location where the terminal is located being within the geographic location range, measuring the neighboring cell

**FIG. 9**

S81

determining the target cell based on the location information of the terminal

**FIG. 10**

S91

determining the target cell based on a distance between the
terminal and the target cell

**FIG. 11**

S101

determining the target cell based on the R criterion and the
distance between the terminal and the target cell

**FIG. 12**

S111

reselecting, by the terminal, the target cell

**FIG. 13**

S121

sending a first message, in which the first message is configured
to indicate parameter information that the terminal performs a cell
reselection based on location information

**FIG. 14**

<u>100</u>

```
┌─────────────────────────────┐  ╱101
│      processing unit          │
└─────────────────────────────┘
              │
┌ ─ ─ ─ ─ ─ ─ │ ─ ─ ─ ─ ─ ─ ┐  ╱102
│       receiving unit          │
└ ─ ─ ─ ─ ─ ─ ─ ─ ─ ─ ─ ─ ─ ┘
```

**FIG. 15**

<u>200</u>

```
┌─────────────────────────────┐  ╱201
│       sending unit            │
└─────────────────────────────┘
```

**FIG. 16**

**FIG. 17**

400

422 — processing component

power supply component — 426

432 — memory

network interface — 450

I/O interface — 458

FIG. 18

## INTERNATIONAL SEARCH REPORT

| International application No. |
| --- |
| **PCT/CN2021/084781** |

**A.    CLASSIFICATION OF SUBJECT MATTER**

H04W 36/32(2009.01)i

According to International Patent Classification (IPC) or to both national classification and IPC

**B.    FIELDS SEARCHED**

Minimum documentation searched (classification system followed by classification symbols)

H04W, H04Q7/-, H04L

Documentation searched other than minimum documentation to the extent that such documents are included in the fields searched

Electronic data base consulted during the international search (name of data base and, where practicable, search terms used)

CNABS, CNTXT, CNKI, VEN, WOTXT, USTXT, EPTXT, 3GPP: 位置, 定位, 距离, 小区, 重选, 选择, 非地面, 非陆地, 卫星, location, position, distance, cell, reselect, select, choose, non-terrestrial, satellite

**C.    DOCUMENTS CONSIDERED TO BE RELEVANT**

| Category* | Citation of document, with indication, where appropriate, of the relevant passages | Relevant to claim No. |
| --- | --- | --- |
| X | CN 111757411 A (TELECOMMUNICATIONS TECHNOLOGY RESEARCH INSTITUTE CO., LTD.) 09 October 2020 (2020-10-09)<br>description, paragraphs [0139]-[0279], and figures 1-8 | 1-5, 10, 14, 16-23 |
| X | CN 111294733 A (SPREADTRUM COMMUNICATIONS SHANGHAI INC.) 16 June 2020 (2020-06-16)<br>description, paragraphs [0049]-[0110], and figures 1-6 | 1-5, 10, 14, 16, 17, 19-23 |
| X | CN 112153707 A (HUAWEI TECHNOLOGIES CO., LTD.) 29 December 2020 (2020-12-29)<br>description, paragraphs [0061]-[0227], and figures 1-10 | 1-5, 10, 14, 16, 17, 19-23 |
| A | CN 111800830 A (HUAWEI TECHNOLOGIES CO., LTD.) 20 October 2020 (2020-10-20)<br>entire document | 1-23 |
| A | US 2015087301 A1 (BROADCOM CORP.) 26 March 2015 (2015-03-26)<br>entire document | 1-23 |

☐ Further documents are listed in the continuation of Box C.          ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **20 October 2021** | **15 November 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

| International application No. |
| --- |
| **PCT/CN2021/084781** |

| Patent document cited in search report | | | Publication date (day/month/year) | Patent family member(s) | | | Publication date (day/month/year) |
| --- | --- | --- | --- | --- | --- | --- | --- |
| CN | 111757411 | A | 09 October 2020 | WO | 2020192454 | A1 | 01 October 2020 |
| CN | 111294733 | A | 16 June 2020 | None | | | |
| CN | 112153707 | A | 29 December 2020 | WO | 2021000825 | A1 | 07 January 2021 |
| CN | 111800830 | A | 20 October 2020 | None | | | |
| US | 2015087301 | A1 | 26 March 2015 | None | | | |

Form PCT/ISA/210 (patent family annex) (January 2015)